# EUROPEAN PATENT APPLICATION

(11) **EP 3 045 764 A1**
(43) Date of publication of application: **20.07.2016**
(21) Application number: 14868650.4
(22) Date of filing: 21.11.2014
(51) Int. Cl.: F16F 9/36, F16J 15/18, F16J 15/32

(54) **DAMPER**

(30) Priority: 04.12.2013 JP 2013251056
(71) Applicant: KYB Corporation, Tokyo 105-6111 (JP); KYB-YS Co., Ltd., Hanishina-Gun, Nagano 389-0688 (JP)
(72) Inventor: TOYOUCHI, Atsushi, Tokyo 105-6111 (JP); NAKAZATO, Masakazu, Tokyo 105-6111 (JP); SEKINE, Shinichi, Tokyo 105-6111 (JP); SAITO, Yasushi, Hanishina-gun Nagano 389-0688 (JP); FUKUZAWA, Yuji, Hanishina-gun Nagano 389-0688 (JP)
(74) Representative: Müller-Boré & Partner Patentanwälte PartG mbB
(86) International application number: PCT/JP2014/080871
(87) International publication number: WO 2015/083565

(57) **Abstract**

Providing a damper which can prevent leak of the fluid filling a cylinder and can maintain a proper reaction force and damping characteristic.

A damper includes a piston (20) reciprocally movable in a cylinder (10) thereby dividing an interior of the cylinder (10) into a first chamber (A) located at an open end (11) side and a second chamber (B) located at a closed end (12) side, a piston rod (30) having a distal end (31) to which the piston (20) is connected and a rear end (33) side protruding outward from the open end (11) of the cylinder (10), a rod guide (40) fixed to the open end (11) of the cylinder (10) and having a through hole (44) through which the piston rod (30) is reciprocally movable, and a seal (49) which is provided in the rod guide (40) so as to be located at a position spaced away from an outer end (Z) of a sliding surface (47) of the through hole (44) to the first chamber (A) side by a distance longer than a maximum stroke width (S) of the piston rod (30).

## Description

### Technical Field

The present invention relates to a damper.

### Background Art

Undermentioned Patent Document 1 discloses a conventional damper. This damper includes a cylinder, a piston, a piston rod, a rod guide and a spring member. The cylinder is bottomed and has an open end and a closed end. The piston is reciprocally movable in the cylinder and divides an interior of the cylinder into a first chamber located at the open end side and a second chamber located at the closed end side. The piston rod has a distal end connected to the piston and a rear end side protruding out of the open end of the cylinder. The rod guide is fixed to the open end of the cylinder and has a through hole through which the piston rod is inserted to be reciprocally movable. Further, the rod guide has a seal provided near an outer end of a sliding surface of the through hole in contact with an outer periphery of the piston rod. The spring member is placed in the second chamber. Further, the cylinder is filled with compressible silicone oil as a fluid. This damper can support load by a combination of a fluid spring effect of silicone oil and the spring member.

### Prior Art Document

### Patent Documents

Patent Document 1: Japanese Patent Application Publication No. JP-A-2012-149690

### Summary of the Invention

### Problem to Be Overcome By the Invention

However, since the seal is provided near the outer end of the sliding surface of the through hole in the damper of Patent Document 1, there is a possibility that the silicone oil may leak over the seal. More specifically, when the piston rod is reciprocally moved through the through hole of the rod guide, the outer periphery of the piston rod sometimes abuts against the outer end of the sliding surface of the through hole. On this occasion, an axially extending scratch is sometimes formed on the outer periphery of the piston rod. When the scratch on the outer periphery of the piston rod extends out of the first chamber side over the seal, there is a possibility that the silicone oil may leak along the scratch. Upon leak of the silicone oil, the damper cannot obtain a proper reaction force and damping characteristic.

The present invention was made in view of the foregoing conventional art circumstances and has a subject matter of providing a damper which can prevent leak of the fluid filling the cylinder and can maintain a proper reaction force and damping characteristic.

### Means for Overcoming the Problem

A damper of the present invention includes a cylinder, a piston, a piston rod, a rod guide and a seal provided in the rod guide. The cylinder is bottomed and has an open end and a closed end. The cylinder is filled with a fluid. The piston is reciprocally movable in the cylinder thereby dividing an interior of the cylinder into a first chamber located at the open end side and a second chamber located at the closed end side. The piston rod has a distal end to which the piston is connected and a rear end side protruding out of the open end of the cylinder. The rod guide is fixed to the open end of the cylinder and has a through hole through which the piston rod is reciprocally movable. The seal is provided in the rod guide so as to be located at a position spaced away from an outer end of a sliding surface of the through hole to the first chamber side by a distance longer than a maximum stroke width of the piston rod. The sliding surface is brought into contact with an outer periphery of the piston rod.

The damper includes the seal provided at the position spaced away from the outer end of the sliding surface of the through hole to the first chamber side by the distance longer than the maximum stroke width of the piston rod. Accordingly, even when the outer end of the sliding surface of the through hole abuts against the outer periphery of the piston rod when the piston rod is reciprocally moved through the through hole of the rod guide and thereby the outer periphery of the piston rod is scratched, the scratch is prevented from moving over the seal to the first chamber side. As a result, the silicone oil can be prevented from leaking out due to the scratch on the outer periphery of the piston rod.

Accordingly, the damper of the invention can prevent leak of the fluid filling the cylinder and can maintain a proper reaction force and damping characteristics.

### Brief Description of the Drawings

Fig. 1 is a sectional view of the damper according to embodiment 1, showing a most extended state of the damper;
Fig. 2 is a sectional view of the damper, showing a most contracted state of the damper in embodiment 1;
Fig. 3 is a sectional view of the damper according to embodiment 2, showing a most extended state of the damper;
Fig. 4 is a sectional view of the damper, showing a most contracted state of the damper in embodiment 2; and
Fig. 5 is a sectional view of U-shaped packing in embodiment 2.

### Mode for Carrying Out the Invention

Favorable embodiments will be described.

The seal of the damper of the invention may be located at the position spaced away from an inner end of the sliding surface to an outer end side of the sliding surface by a distance longer than the maximum stroke width of the piston rod. In this case, even when the inner end of the sliding surface of the through hole abuts against the outer periphery of the piston rod when the piston rod is reciprocally moved in the through hole of the rod guide and thereby the outer periphery of the piston rod is scratched, the scratch is prevented from moving outside over the seal. As a result, the fluid can be prevented from leaking out due to the scratch on the outer periphery of the piston rod.

Further, the through hole of the damper of the invention has a first enlarged diameter part having a diameter gradually expanding toward an outer end surface of the rod guide and a uniform diameter part extending from inside the first enlarged diameter part to an inner end surface side of the rod guide with a uniform diameter. The first enlarged diameter part and the uniform diameter part have a boundary which is the outer end of the sliding surface. The through hole is formed with a recess located at a position which is spaced away from the outer end of the sliding surface to the first chamber side by the distance longer than the maximum stroke width of the piston rod. The recess goes round the inner periphery of the rod guide. The seal may be formed by fitting a packing into the recess. In this case, since the seal is formed by fitting the packing in the recess, the packing can be prevented from displacement even when the piston rod is reciprocally moved in the through hole of the rod guide. Further, since the scratch of the piston rod caused by the abutting of the outer end of the sliding surface is not moved over the seal to the first chamber side, the fluid filling the cylinder can be prevented from leaking.

The packing has a convex lip going round the inner periphery against which the outer periphery of the piston rod abuts. The lip may be located at the position which is spaced away from the outer end of the sliding surface to the first chamber side by the distance longer than the maximum stroke width of the piston rod. In this case, since the lip is prevented from being damaged by the scratch of the piston rod, the fluid filling the cylinder can be prevented from leaking.

The through hole of the damper of the invention has a second enlarged diameter part which is continuous with the uniform diameter part and has a diameter gradually expanding toward the inner end surface of the rod guide. The second enlarged diameter part and the uniform diameter part have a boundary which is the inner end of the sliding surface. The recess may be formed at the position which is spaced outward away from the inner end of the sliding surface by the distance longer than the maximum stroke width of the piston rod. In this case, since the scratch of the piston rod caused by the abutting of the inner end of the sliding surface is not moved outward over the seal, the fluid filling the cylinder can be prevented from leaking.

The packing has a convex lip against which the outer periphery of the piston rod abuts. The lip is located at the position which is spaced away from the outer end of the sliding surface to the first chamber side by the distance longer than the maximum stroke width of the piston rod and which is spaced away outward from the inner end of the sliding surface by the distance longer than the maximum stroke width of the piston rod. In this case, since the lip is prevented from being damaged by the scratch of the piston rod, the fluid filling the cylinder can be prevented from leaking.

Embodiments 1 and 2 embodying the damper of the invention will be described with reference to the drawings.

### Embodiment 1

The damper according to embodiment 1 includes a cylinder 10, a piston 20, a piston rod 30, a rod guide 40, a seal 49, a compression coil spring 50 serving as a spring member and silicone oil 60 which fills the cylinder 10 as a fluid and is compressive.

The cylinder 10 is bottomed and formed into a cylindrical shape. The cylinder 10 has an open end 11 and a closed end 12. The open end 11 has an inner periphery formed with a screw thread, thereby forming a female thread 13. The closed end 12 has a central inner surface formed with a protrusion 14 protruding into a disc shape. The cylinder 10 includes a first region X located at the open end 11 side with respect to a substantially central part thereof and a second region Y located at the closed end 12 side with respect to the substantially central part thereof. The first region X has a smaller inner diameter than the second region Y. The cylinder 10 has a mounting hole 15 formed through the closed end 12 in a direction perpendicular to a central axis thereof. A mounting pin (not shown) is to be inserted through the mounting hole 15 when the damper is mounted on an object.

The piston 20 includes a cylindrical central portion 21 and an annular outer periphery 22 extending continuously outward from a central outer periphery of the central portion 21. The outer periphery 22 has a slightly smaller outer diameter than an inner diameter of the first region X of the cylinder 10. The piston 20 is reciprocally moved in the first region X and divides an interior of the cylinder 10 into a first chamber A located at the open end 11 side and a second chamber B located at the closed end 12 side.

The piston rod 30 has a distal end 31, a middle portion 32 and a rear end 33. The distal end 31 and the middle portion 32 each have a columnar shape and are formed to be continuously coaxial. The distal end 31 has an outer diameter substantially equal to an inner diameter of the central portion 21. The middle portion 32 has an outer diameter larger than the inner diameter of the central portion 21 of the piston 20.

The piston 20 is connected to the piston rod 30 in the following manner. The central portion 21 of the piston 20 is inserted around the distal end 31 of the piston rod 30 which has been inserted through a through hole 44 of a rod guide 44 which will be described later. The distal end 31 of the piston rod 30 protruding from the central portion 21 of the piston 20 is machined by high-spin riveting while the distal end side end surface of the middle portion 32 of the piston rod 30 is in abutment with an end surface of the central portion 21 of the piston 20. In the high-spin riveting, the distal end 31 is pressurized to be collapsed while being rotated, thereby being riveted. Thus, the piston 20 is connected to the piston rod 30 inserted through the through hole 44 of the rod guide 40 so as to be reciprocally movable.

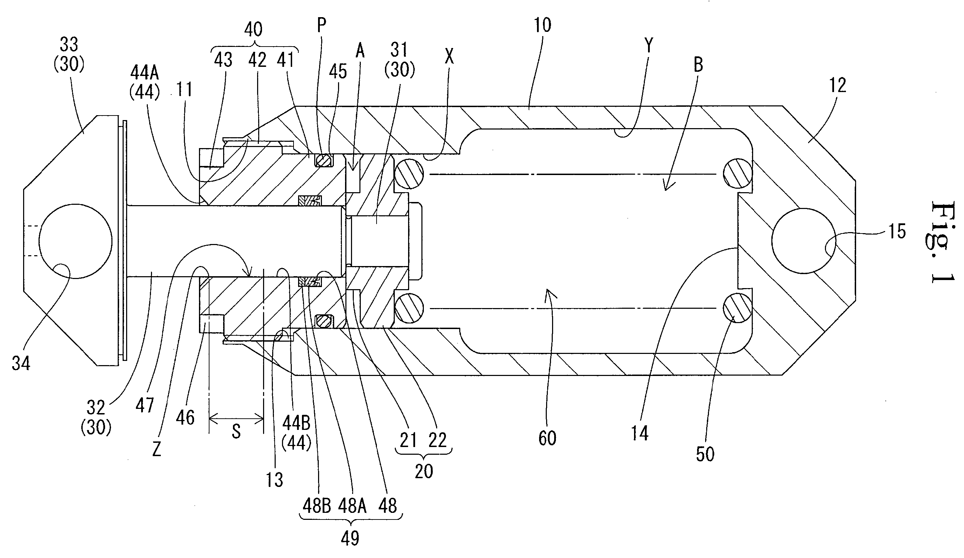

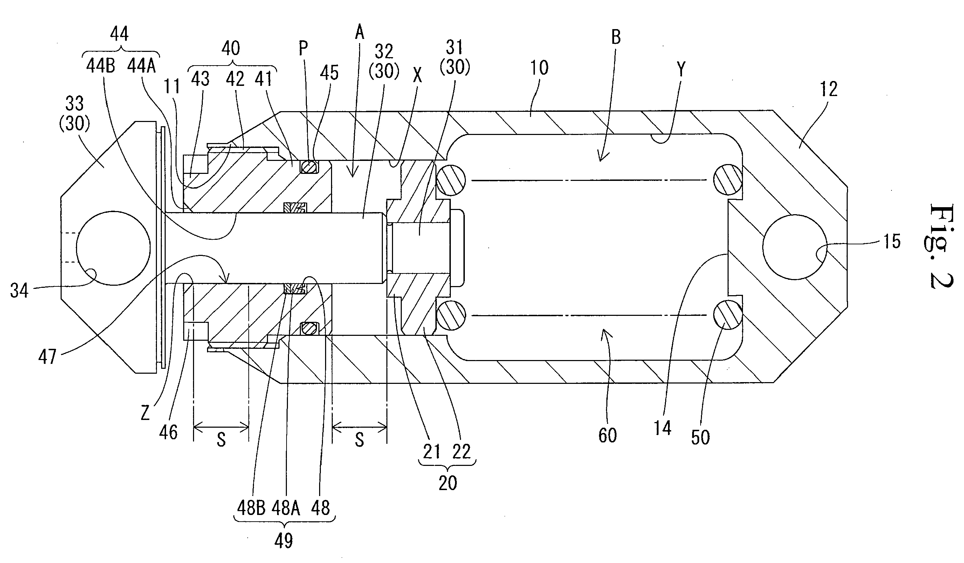

The rear end 33 of the piston rod 30 is coaxial with the distal end 31 and the middle portion 32 of the piston rod 30 and is formed into a disc shape. The rear end 33 has two cutouts and is formed into a substantially hexagonal profile that is similar to a trapezoidal shape, as shown in Figs. 1 and 2. The rear end 33 of the piston rod 30 has a mounting hole 34 formed therethrough in a direction perpendicular to central axes of the distal end 31, the middle portion 32 and the rear end 33. A mounting pin (not shown) is to be inserted through the mounting hole 34 when the damper is mounted on an object.

The rod guide 40 includes an insertion portion 41, a male thread 42 and a clamping portion 43 and is formed into a substantially cylindrical shape. Further, the rod guide 40 is formed with a through hole 44 extending therethrough along a central axis thereof. The insertion portion 41 has an outer diameter substantially equal to the inner diameter of the first region X of the cylinder 10. The insertion portion 41 is formed with a groove 45 extending round the outer periphery thereof. An O-ring P is fitted in the groove 45. The O-ring P can ensure the sealing performance between the inner periphery of the cylinder 10 and the outer periphery of the insertion portion 41. The male thread 42 is continuous with the insertion portion 41 and has a slightly larger outer diameter than the insertion portion 41. The male thread 42 has an outer periphery formed with a screw thread. The male thread 42 is screwed into the female thread 13 of the cylinder 10. The fastening portion 43 is continuous with the male thread 42 and has a slightly smaller profile than the male thread 42. The fastening portion 43 has two recesses 46 provided at a corner between the outer periphery and an outer end surface and at a portion symmetric about the central axis respectively. The recesses 46 are open in two directions of the outer periphery and the outer end surface. The recesses 46 can lock a distal end of a rotating tool which is used when the insertion portion 41 of the rod guide 40 is inserted into the first region X of the cylinder 10 and the male thread 42 is screwed into the female thread 13 of the cylinder 10.

The through hole 44 includes a first enlarged diameter part 44A having a diameter gradually expanding toward the outer end surface of the rod guide 40 and a uniform diameter part 44B extending from inside the first enlarged diameter part 44A to an inner end surface of the rod guide 40 with a uniform diameter. The uniform diameter part 44B has an inner diameter substantially equal to the outer diameter of the middle portion 32 of the piston rod 30. The uniform diameter part 44B has an inner periphery which serves as a sliding surface 47 which is brought into contact with the outer periphery of the piston rod 30. Accordingly, the sliding surface 47 has an outer end Z which is a boundary between the first enlarged diameter part 44A and the uniform diameter part 44B. The sliding surface 47 defining the through hole 44 has a recess 48 located at a position which is spaced away from the outer end Z of the sliding surface 47 to the first chamber A side by a distance longer than a maximum stroke width S of the piston rod 30. The recess 48 goes round the inner periphery of the rod guide 40. A V-shaped packing 48A and a flat packing (flat gasket) 48B are fitted in the recess 48, thereby forming the seal 49. Thus, since being fitted in the recess 48, the V-shaped packing 48A and the flat packing 48B can be prevented from displacement even when the piston rod 30 is slid through the through hole 44 of the rod guide 40.

The damper having the foregoing construction will be assembled in the following manner. Firstly, the compression coil spring 50 is inserted into the cylinder 10. In this case, the protrusion 14 protruding from the central inner surface of the closed end 12 of the cylinder 10 is inserted into one end of the compression coil spring 50. More specifically, the protrusion 14 guides the compression coil spring 50 to a proper position. Next, a predetermined amount of silicone oil 60 is injected into the cylinder 10. The piston rod 30 is inserted through the through hole 44 so as to be reciprocally movable, and the piston 20 is connected to the piston rod 30. The rod guide 40 is prepared in this state. The male thread 42 of the rod guide 40 is screwed into the female thread 13 of the open end 11 of the cylinder 10. In this case, the central portion 21 of the piston 20 which protrudes in the cylinder 10 to the closed end 12 side with respect to the outer periphery 22 of the piston 20 is inserted into the other end of the compression coil spring 50. More specifically, the central portion 21 guides the compression coil spring 50 to the proper position. Thus, the compression coil spring 50 is held between the inner surface of the closed end 12 of the cylinder 10 and the outer periphery 22 of the piston 20. The rod guide 40 is screwed into the cylinder 10 thereby to be located at a position such that the damper exerts a desirable reaction force, namely, the damping characteristics. In other words, the reaction force, namely, the damping characteristics of the damper can be adjusted by adjusting a screwing position of the rod guide 40. Subsequently, the edge of the open end 11 of the cylinder 10 is swaged so that the rod guide 40 is fixed. The damper is thus assembled.

Fig. 2 shows a most contracted state of the damper. Thus, the damper is provided with the seal 49 located at the position which is spaced away from the outer end Z of the sliding surface 47 to the first chamber A side by the distance longer than the maximum stroke width S of the piston rod 30. Accordingly, even when the outer end Z of the sliding surface 47 of the through hole 44 abuts against the outer periphery of the piston rod 30 when the piston rod 30 is reciprocally moved through the through hole 44 of the rod guide 40 and thereby the outer periphery of the piston rod 30 is scratched, the scratch is prevented from moving over the seal to the first chamber A side. As a result, the silicone oil 60 can be prevented from leaking out due to the scratch on the outer periphery of the piston rod 30.

Accordingly, the damper of embodiment 1 can prevent leak of the fluid (the silicone oil 60) filling the cylinder 10 and can maintain a proper reaction force and damping characteristics.

Further, the damper includes the seal 49 formed by fitting the V-shaped packing 48A in the recess 48 formed in the through hole 44 of the rod guide 40. As a result, the V-shaped packing 48A can be prevented from displacement even when the piston rod 30 is reciprocally moved through the hole 44 of the rod guide 40.

### Embodiment 2

The damper according to embodiment 2 includes a cylinder 110, a piston 120, a washer 125, a piston rod 130, a rod guide 140, a seal 149, a cover 150 and a silicone oil 160 which fills the cylinder 110 as a fluid and is compressive.

The cylinder 110 is bottomed and formed into a cylindrical shape. The cylinder 110 has an open end 111 and a closed end 112. The open end 111 has an inner periphery formed with a screw thread, thereby forming a female thread 113. The cylinder 110 includes an inner region X which is located on the inner side of the open end 111 and has an inner diameter that is uniform and smaller than an inner diameter of the open end 111. The cylinder 110 has a mounting hole 115 extending through the closed end 112 in a direction perpendicular to the central axis thereof. A mounting pin (not shown) is to be inserted through the mounting hole 115 when the damper is mounted on an object.

The piston 120 is formed into a disc shape and includes a central part having a through hole 121 through which a distal end of the piston rod 130 is inserted. The piston 120 has an outer diameter smaller than the inner diameter of the inner region X of the cylinder 110. The piston 120 is reciprocally moved in the inner region X and divides an interior of the cylinder 110 into a first chamber A located at the open end 111 side and a second chamber B located at the closed end 112 side.

The washer 125 is formed into a disc shape and includes a central part having a through hole 126 through which a distal end of the piston rod 130 is inserted. The washer 125 has a smaller outer diameter than the piston 120 and a smaller thickness than the piston 120. The through hole 126 has an inner diameter substantially equal to the inner diameter of the though hole 121 of the piston 120. The washer 125 is held between a distal end surface of the middle portion 132 of the piston rod 130 and the piston 120 and connected to the piston rod 130. The middle portion 132 of the piston rod 130 will be described later.

The piston rod 130 has a distal end 131, the middle portion 132 and a rear end 133. The distal end 131 and the middle portion 132 each have a columnar shape and are formed to be continuously coaxial. The distal end 31 has an outer diameter substantially equal to inner diameters of the through hole 121 of the piston 120 and the through hole 126 of the washer 125. The middle portion 132 has an outer diameter larger than the inner diameter of the through hole 126 of the washer 125.

The piston 120 and the washer 125 will be connected to the piston rod 130 in the following manner. The distal end 131 of the piston rod 130, which is inserted through a through hole 144 of a rod guide 140, is inserted through the through hole 126 of the washer 125 and further through the through hole 121 of the piston 120. The rod guide 140 will be described later. The distal end surface of the middle portion of the piston rod 130 abuts against one side of the washer 125, and the other side of the washer 125 abuts against the end surface of the piston 120. In this state, the distal end 131 of the piston rod 130 protruding from the through hole 121 of the piston 120 is machined by high-spin riveting. In the high-spin riveting, the distal end 131 is pressurized to be collapsed while being rotated, thereby being riveted. Thus, the piston 120 and the washer 125 are connected to the piston rod 130 inserted through the through hole 144 of the rod guide 140 so as to be reciprocally movable.

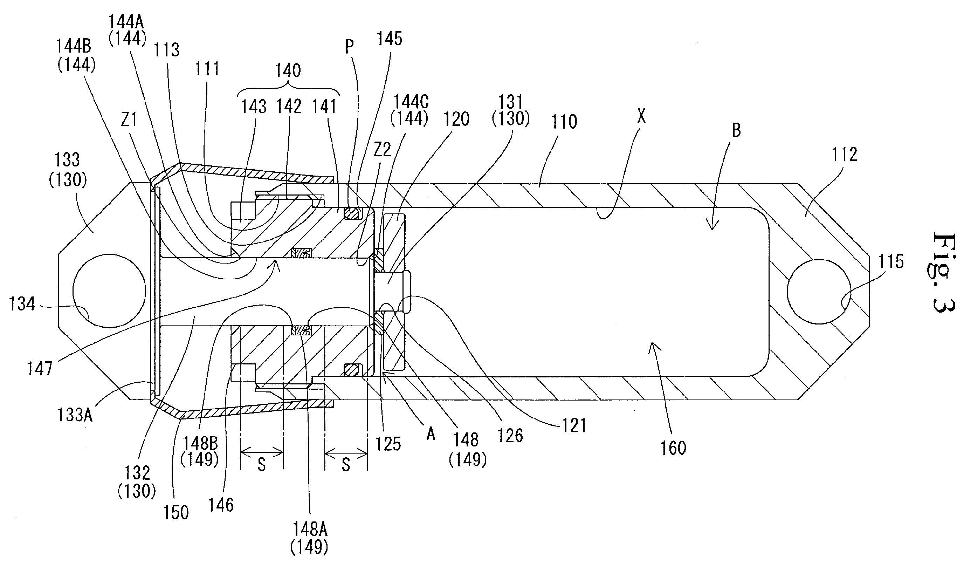

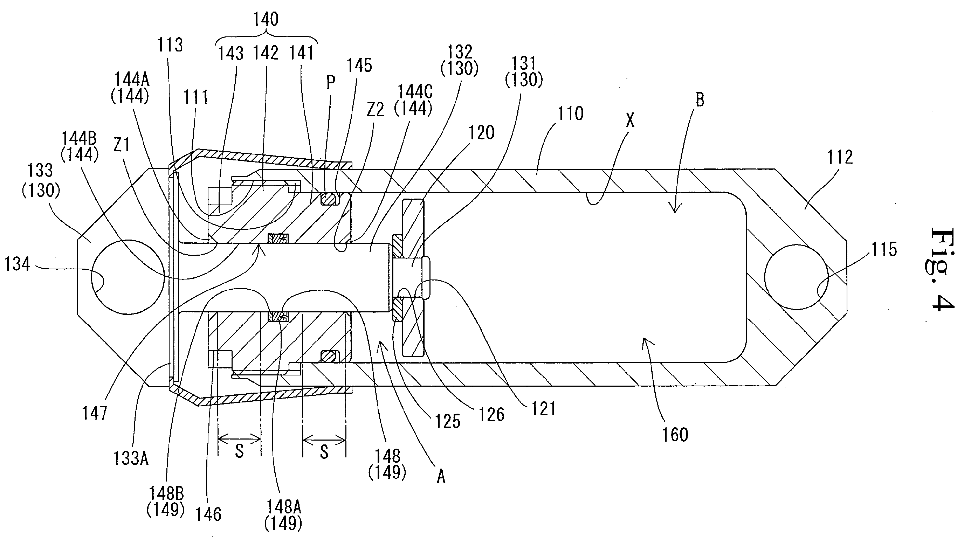

The rear end 133 of the piston rod 130 is coaxial with the distal end 131 and the middle portion 132 of the piston rod 130 and is formed into a disc shape. As shown in Figs. 3 and 4, the rear end 133 has two cutouts and is formed into a substantially hexagonal profile that is similar to a trapezoidal shape, as viewed in two predetermined opposite directions. The rear end 133 of the piston rod 130 has a groove 133A formed through the outer periphery of the middle portion 132 side end of the piston rod 130. One end of a cover 150 which will be described later is fitted in the groove 133A. The rear end 133 of the piston rod 130 has a mounting hole 134 extending in the direction perpendicular to the central axes of the distal end 131, the middle portion 132 and the rear end 133. A mounting pin (not shown) is inserted through the mounting hole 134 when the damper is mounted on the object.

The rod guide 140 includes an insertion portion 141, a male thread 142 and a clamping portion 143 and is formed into a substantially cylindrical shape. Further, the rod guide 140 is formed with a through hole 144 extending along a central axis. The insertion portion 141 has an outer diameter substantially equal to the inner diameter of the first region X of the cylinder 110. The insertion portion 141 is formed with a groove 145 extending round the outer periphery thereof. An O-ring P is fitted in the groove 145. The O-ring P can ensure the sealing performance between the inner periphery of the cylinder 110 and the outer periphery of the insertion portion 141. The male thread 142 is continuous with the insertion portion 141 and has a larger outer diameter than the insertion portion 141. The male thread 142 has an outer periphery formed with a screw thread. The male thread 142 is screwed into the female thread 113 of the cylinder 110. The fastening portion 143 is continuous with the male thread 142 and has a slightly smaller profile than the male thread 142. The fastening portion 143 has two recesses 146 provided at a corner between the outer periphery and an outer end surface and at a portion symmetric about the central axis respectively. The recesses 146 are open in two directions of the outer periphery and the outer end surface. The recesses 146 can lock a distal end of a rotating tool which is used when the insertion portion 141 of the rod guide 140 is inserted into the first region X of the cylinder 110 and the male thread 142 is screwed into the female thread 113 of the cylinder 110.

The through hole 144 includes a first enlarged diameter part 144A having a diameter gradually expanding toward the outer end surface of the rod guide 140, a uniform diameter part 144B extending from inside the first enlarged diameter part 144A to an inner end surface of the rod guide 140 with a uniform diameter, and a second enlarged diameter part 144C having a diameter gradually expanding from an inner end of the uniform diameter part 144B toward the inner end surface of the rod guide 140. The uniform diameter part 144B has an inner diameter substantially equal to the outer diameter of the middle portion 132 of the piston rod 130. The uniform diameter part 144B has an inner periphery which serves as a sliding surface 147 in contact with the outer periphery of the piston rod 130. Accordingly, the sliding surface 147 has an outer end Z1 which is a boundary between the first enlarged diameter part 144A and the uniform diameter part 144B. The sliding surface 147 has an inner end Z2 which is a boundary between a second enlarged diameter part 144C and the uniform diameter part 144B. The through hole 144 has a recess 148 located at the position which is spaced away from the outer end Z1 of the sliding surface 147 by the distance longer than the maximum stroke width S of the piston rod 130 to the first chamber A side and which is further spaced outward away from an inner end Z2 of the sliding surface 147 by a distance longer than the maximum stroke width S of the piston rod 130. The recess 148 goes round the inner periphery of the rod guide 140.

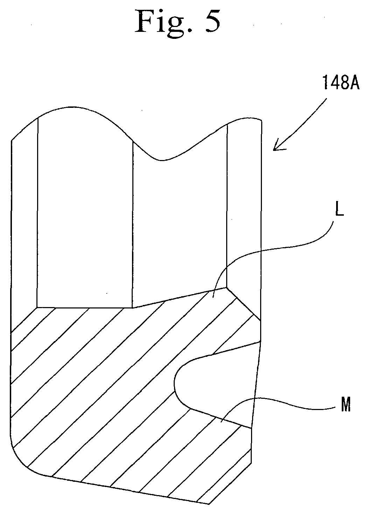

A U-shaped packing 148A and a back-up ring 148B are fitted in the recess 148, thereby forming the seal 149. The U-shaped packing 148A has a groove M which is formed to go round one side surface thereof as shown in FIG. 5. The U-shaped packing 148A further has a convex rip L which is formed on the inner periphery at the one side surface side. The back-up ring 148B is formed into a thin plate-like annular shape and has an outer diameter equal to the inner diameter of the recess 148 and an inner diameter equal to the outer diameter of the piston rod 130, as shown in FIGS. 3 and 4. The U-shaped packing 148A is fitted in the recess 148 while the one side surface thereof formed with the groove M is directed to the inner end surface of rod guide 140. The back-up ring 148B is fitted in the recess 148 nearer the outer end surface side of the rod guide 140 than the U-shaped packing 148A. Thus, the U-shaped packing 148A is fitted in the recess 148. Accordingly, the U-shaped packing 148A can be prevented from displacement even when the piston rod 130 is slid in the through hole 144 of the rod guide 140. Further, even when the inner peripheral side of the U-shaped packing 148A is deformed in the reciprocal movement of the piston rod 130, the back-up ring 148B can prevent the U-shaped packing 148A from penetrating between the piston rod 130 and the rod guide 140.

The cover 150 is formed into a substantially cylindrical shape. The cover 150 has one end bent inward to be fitted into the groove 133A of the rear end 133 of the piston rod 130 and the other end having an inner diameter substantially equal to the outer diameter of the cylinder 110. The other end of the cover 150 has an inner surface in sliding contact with the outer periphery of the cylinder 110. As a result, the cover 150 is reciprocally moved with the reciprocal movement of the piston rod 130. The cover 150 covers a space defined between the rear end 133 of the piston rod 130 and the open end 111 of the cylinder 110 into which the rod guide 140 is screwed, thereby preventing rubbish or the like from entering the space.

The damper having the foregoing construction will be assembled in the following manner. Firstly, a predetermined amount of silicone oil 160 is injected into the cylinder 110. The piston rod 130 is inserted through the through hole 144 so as to be reciprocally movable, and the piston 120 and the washer 125 are connected to piston rod 130. The rod guide 140 is prepared in this state. The male thread 142 of the rod guide 140 is screwed into the female thread 113 of the open end 111 of the cylinder 110. The rod guide 140 is screwed into a position such that the damper exerts a desirable reaction force, namely, the damping characteristics. In other words, the reaction force, namely, the damping characteristics of the damper can be adjusted by adjusting a screwing position of the rod guide 140. Subsequently, the edge of the open end 111 of the cylinder 110 is swaged so that the rod guide 140 is fixed. The damper is thus assembled.

Fig. 3 shows a most extended state of the damper and Fig. 4 shows a most contracted state of the damper. Thus, the damper is provided with the seal 14 located at the position which is spaced away from the outer end Z1 of the sliding surface 147 by the distance longer than the maximum stroke width S of the piston rod 130 to the first chamber A side. Accordingly, even when the outer end Z1 of the sliding surface 147 of the through hole 144 abuts against the outer periphery of the piston rod 130 when the piston rod 130 is reciprocally moved through the through hole 144 of the rod guide 140 and thereby the outer periphery of the piston rod 130 is scratched, the scratch is prevented from moving over the seal 149 (the lip L of the U-shaped packing 148A) to the first chamber A side. The seal 149 is located at the position which is further spaced outward away from the inner end Z2 of the sliding surface 147 by the distance longer than the maximum stroke width S of the piston rod 130. Accordingly, even when the inner end Z2 of the sliding surface 147 of the through hole 144 abuts against the outer periphery of the piston rod 130 when the piston rod 130 is reciprocally moved through the through hole 144 of the rod guide 140 and thereby the outer periphery of the piston rod 130 is scratched, the scratch is prevented from moving outward over the seal 149 (the lip L of the U-shaped packing 148A) . As a result, the silicone oil 160 can be prevented from leaking out due to the scratch on the outer periphery of the piston rod 130.

Accordingly, the damper of embodiment 2 can also prevent leak of the fluid (the silicone oil 160) filling the cylinder 110 and can maintain an adequate reaction force and damping characteristics.

Further, since the lip L of the U-shaped packing 148A is prevented from damaged by the scratch on the piston rod 130, the fluid filling the cylinder 110 can be prevented from leaking.

Further, the seal 149 is formed by fitting the U-shaped packing 148A into the recess 148 formed in the through hole 144 of the rod guide 140. Accordingly, the U-shaped packing 148A can be prevented from displacement even when the piston rod 130 is reciprocally moved in the through hole 144 of the rod guide 140.

The invention should not be limited to embodiments 1 and 2 described above with reference to the drawings. For example, the technical scope of the invention encompasses the following embodiments.
(1) Although a single seal is provided between the rod guide and the piston rod in embodiment 1, a plurality of seals may be provided at the position which is spaced away from the outer end of the sliding surface by the distance longer than the maximum stroke width of the piston rod to the first chamber side, instead.
(2) Although a single seal is provided between the rod guide and the piston rod in embodiment 2, a plurality of seals may be provided at the position which is spaced away from the outer end of the sliding surface by the distance longer than the maximum stroke width of the piston rod to the first chamber side and which is further spaced outward away from the inner end of the sliding surface by the distance longer than the maximum stroke width of the piston rod, instead.
(3) Although the cylinder is filled with the silicone oil in each of embodiments 1 and 2, the cylinder may be filled with another compressible oil, instead.
(4) Although the compressive coil spring is housed in the cylinder in embodiment 1, the compressive coil spring may not be provided.
(5) Although the cylinder is filled with only the silicone oil in embodiment 2, the compressive coil spring may be housed in the cylinder.
(6) Although the first enlarged diameter part is formed as a plane gradually spread toward the outer end surface of the rod guide in each of embodiments 1 and 2, the first enlarged diameter part may be formed as a curved surface.
(7) Although the second enlarged diameter part is formed as a plane gradually spread toward the inner end surface of the rod guide in embodiment 2, the second enlarged diameter part may be formed as a curved surface.

### Explanation of Reference Symbols

10, 110 ... cylinder; 11, 111 ... open end; 12, 112 ... closed end; 20, 120 ... piston; A ... first chamber; B ... second chamber; 30, 130 ... piston rod; 31, 131 ... distal end (of piston rod); 33, 133 ... rear end (of piston rod); 40, 140 ... rod guide; 44, 144 ... through hole; 44A, 144A ... first enlarged diameter part; 44B, 144B ... uniform diameter part; 47, 147 ... sliding surface; 48, 148 ... recess; 48A, 48B ... packing (48A ... V-shaped packing, 48B ... flat packing); 148A ... U-shaped packing (packing); Z, Z1 ... outer end (of sliding surface); Z2 ... inner end (of sliding surface); S ... maximum stroke width; 49, 149 ... seal; 60, 160 ... silicone oil (fluid) ; and L ... lip

## Claims

1. A damper comprising:
a cylinder which is bottomed and has an open end and a closed end, the cylinder being filled with a fluid;
a piston reciprocally movable in the cylinder thereby dividing an interior of the cylinder into a first chamber located at the open end side and a second chamber located at the closed end side;
a piston rod having a distal end and a rear end, the piston being connected to the distal end, the rear end side protruding out of the open end of the cylinder;
a rod guide fixed to the open end of the cylinder and having a through hole through which the piston rod is reciprocally movable; and
a seal which is provided in the rod guide so as to be located at a position spaced away from an outer end of a sliding surface of the through hole to the first chamber side by a distance longer than a maximum stroke width of the piston rod, the sliding surface contacting an outer periphery of the piston rod.

2. The damper according to claim 1, wherein the seal is located at the position spaced outward away from an inner end of the sliding surface by a distance longer than the maximum stroke width of the piston rod.

3. The damper according to claim 1 or 2, wherein:
the through hole includes a first enlarged diameter part having a diameter gradually expanding toward an outer end surface of the rod guide and a uniform diameter part extending from inside the first enlarged diameter part to an inner end surface side of the rod guide with a uniform diameter;
the first enlarged diameter part and the uniform diameter part have a boundary which is the outer end of the sliding surface;
the through hole is formed with a recess located at a position which is spaced away from the outer end of the sliding surface to the first chamber side by the distance longer than the maximum stroke width of the piston rod, the recess going round the inner periphery of the rod guide; and
the seal is formed by fitting a packing into the recess.

4. The damper according to claim 3, wherein:
the packing has a convex lip going round the inner periphery against which the outer periphery of the piston rod abuts; and
the lip is located at the position which is spaced away from the outer end of the sliding surface by the distance longer than the maximum stroke width of the piston rod to the first chamber side.

5. The damper according to claim 3, wherein:
the through hole has a second enlarged diameter part which is continuous with the uniform diameter part and has a diameter gradually expanding toward the inner end surface of the rod guide;
the second enlarged diameter part and the uniform diameter part have a boundary which is the inner end of the sliding surface; and
the recess is formed at the position which is spaced outward away from the inner end of the sliding surface by the distance longer than the maximum stroke width of the piston rod.

6. The damper according to claim 5, wherein:
the packing has a convex lip against which the outer periphery of the piston rod abuts; and
the lip is located at the position which is spaced away from the outer end of the sliding surface to the first chamber side by the distance longer than the maximum stroke width of the piston rod and which is spaced outward away from the inner end of the sliding surface by the distance longer than the maximum stroke width of the piston rod.
